# EUROPEAN PATENT APPLICATION

(11) **EP 4 693 036 A1**
(43) Date of publication of application: **11.02.2026**
(21) Application number: 24848036.0
(22) Date of filing: 18.07.2024
(51) Int. Cl.: G06F 9/445

(54) **METHOD AND APPARATUS FOR STARTING APPLICATION PROGRAM, AND ELECTRONIC DEVICE**

(30) Priority: 31.07.2023 CN 202310953516
(71) Applicant: Huawei Technologies Co., Ltd., Shenzhen, Guangdong 518129 (CN)
(72) Inventor: MENG, Fanrui, Shenzhen, Guangdong 518129 (CN)
(74) Representative: Pfenning, Meinig & Partner mbB
(86) International application number: PCT/CN2024/106163
(87) International publication number: WO 2025/026077

(57) **Abstract**

This application provides a method and an apparatus for starting an application, and an electronic device. The method includes: An electronic device displays a desktop in response to a first operation of a user, and adjusts a priority of a splash screen thread to a first priority, where the desktop includes a first icon, the first icon is an icon of a first application, and the first priority is higher than an initial priority of the splash screen; invokes the splash screen thread based on the first priority in response to a second operation performed by the user on the first icon; displays a splash screen of the first application through the splash screen thread; and displays an interface of the first application after displaying the splash screen of the first application. According to the method for starting an application in this application, when the electronic device displays the desktop, the priority of the splash screen thread may be increased; and when the user triggers startup of an application, a system invokes the splash screen thread with an increased priority, to avoid freezing of a splash screen of the application, and improve user experience.

## Description

This application claims priority to Chinese Patent Application No. 202310953516.7, filed with the China National Intellectual Property Administration on July 31, 2023 and entitled "METHOD AND APPARATUS FOR STARTING APPLICATION, AND ELECTRONIC DEVICE", which is incorporated herein by reference in its entirety.

### TECHNICAL FIELD

This application relates to the field of electronic devices, and in particular, to a method and an apparatus for starting an application, and an electronic device.

### BACKGROUND

With development of science and technologies, an electronic device may carry an application that provides various services for a user, and the user may trigger startup of the application on a user interface. A current Android (Android) system provides a splash screen (SplashScreen) thread-related application programming interface (application programming interface, API), and the API may be used to develop a startup page of an application in the Android system. To be specific, during startup of the application, the Android system may construct a splash screen. However, a splash screen thread may not be invoked, or cannot be invoked in a timely manner due to many reasons, leading to startup freezing of the application.

Therefore, how to invoke the splash screen thread in a timely manner to make the startup of the application smoother is a problem that urgently needs to be resolved currently.

### SUMMARY

This application provides a method and an apparatus for starting an application, and an electronic device. In the method, a splash screen thread may be invoked in a timely manner, to make an application startup process smoother.

According to a first aspect, a method for starting an application is provided. The method is applied to an electronic device, and includes: The electronic device displays a first interface in response to a first operation of a user, and adjusts a priority of a splash screen thread to a first priority, where the first interface is a desktop of the electronic device, the first interface includes a first icon, the first icon is an icon of a first application, and the first priority is higher than an initial priority of the splash screen thread; invokes the splash screen thread based on the first priority in response to a second operation performed by the user on the first icon; displays a splash screen of the first application through the splash screen thread; and displays an interface of the first application after displaying the splash screen of the first application.

For example, the user may trigger, by entering an unlock password of the electronic device or through facial recognition or fingerprint recognition, the electronic device to display the first interface. Icons of a plurality of applications may be displayed on the desktop (or a home screen) of the electronic device, and the first icon is one of the plurality of icons. Icons of applications are displayed on the desktop of the electronic device, and the user may slide left and right on the desktop, to enable the electronic device to display icons of different applications. The user may perform a tap operation on the first icon, to trigger startup of the application and invoke the splash screen thread with an increased priority.

For example, a value of the initial priority of the splash screen may be 110, and a value of the first priority may be 97. It can be understood that a smaller value indicates a higher priority.

According to the foregoing solution, when the electronic device displays the desktop, the priority of the splash screen thread may be increased, to prepare for triggering startup of the application by the user. When the user triggers startup of the application, even in a scenario in which the electronic device has high load, a system may still invoke the splash screen thread with an increased priority, to avoid freezing of the splash screen of the application, and improve user experience.

With reference to the first aspect, in some implementations of the first aspect, adjusting the priority of the splash screen thread to the first priority includes: adjusting the priority of the splash screen thread to the first priority; and adjusting a priority of an associated thread of the splash screen thread.

For example, the associated thread of the splash screen thread is a binder thread.

It can be understood that the electronic device may further increase a priority of the binder thread while increasing the priority of the splash screen thread. The priority of the binder thread affects the invocation of the splash screen thread. Therefore, the increase in the priority of the binder thread enables the system to preferentially invoke the splash screen thread.

With reference to the first aspect, in some implementations of the first aspect, the method further includes: invoking the associated thread of the splash screen thread based on the first priority; and displaying the splash screen of the first application through the splash screen thread includes: displaying the splash screen of the first application through the splash screen thread and the associated thread of the splash screen.

According to the foregoing solution, when both the priority of the splash screen thread and the priority of the associated thread of the splash screen thread are increased, the system invokes the splash screen thread and the associated thread of the splash screen thread that have increased priorities, to enable the splash screen of the application to be displayed more smoothly.

With reference to the first aspect, in some implementations of the first aspect, before the electronic device displays the first interface in response to the first operation of the user, and adjusts the priority of the splash screen thread to the first priority, the method further includes: The electronic device displays a lock screen in response to a third operation of the user, and buffers an identifier of the splash screen thread.

It should be noted that the electronic device may display the lock screen before displaying the desktop, and the user may press and hold a power button of the electronic device to trigger the electronic device to display the lock screen.

According to the foregoing solution, during power-on of the electronic device, which may also be understood as startup of the system, the identifier of the splash screen thread is fixed, and a process of obtaining the identifier of the splash screen thread is time-consuming. Therefore, when the electronic device is started and enters the lock screen, the identifier of the splash screen thread is buffered, so that a quick response can be given to a subsequent invocation of the splash screen thread, to reduce a delay.

With reference to the first aspect, in some implementations of the first aspect, the method further includes: decreasing the first priority of the splash screen thread to a second priority after displaying the interface of the first application.

According to the foregoing solution, after displaying of the splash screen of the first application is completed, startup of the first application is completed, and the interface of the first application is implemented. In this case, the splash screen thread ends, and the priority of the splash screen thread may be decreased, to release a part of computing power of a central processing unit (central processing unit, CPU) and reduce energy consumption.

With reference to the first aspect, in some implementations of the first aspect, after decreasing the first priority of the splash screen thread to the second priority, the method further includes: when the electronic device re-displays the first interface, increasing the second priority of the splash screen thread to a third priority, where the third priority is higher than the initial priority of the splash screen thread; invoking the splash screen thread based on the third priority in response to a fourth operation performed by the user on the first icon; displaying the splash screen of the first application through the splash screen thread; and displaying the interface of the first application after displaying the splash screen of the first application.

According to the foregoing solution, when the electronic device re-displays the home screen including the plurality of icons, the priority of splash screen thread may be increased again. When the user triggers startup of the application on the home screen, the system may invoke the splash screen thread with an increased priority. To be specific, during warm startup of the application, the splash screen thread with an increased priority may also be invoked, to make a splash screen during the warm startup smooth, and improve user experience.

With reference to the first aspect, in some implementations of the first aspect, the third priority is the same as or different from the first priority.

With reference to the first aspect, in some implementations of the first aspect, the splash screen of the first application includes at least one of the following: the first icon, a picture, or a splash screen.

For example, the first icon may serve as a central icon of the splash screen of the first application, the picture may serve as a background of a splash screen interface of the first application (for example, different colors may be set for the background), and the splash screen may dynamically display the first icon and the picture on a user interface.

According to a second aspect, an apparatus for starting an application is provided, and includes: a display module, configured to display a first interface in response to a first operation of a user, where the first interface is a desktop of an electronic device, the first interface includes a first icon, and the first icon is an icon of a first application; and a management and control module, configured to adjust a priority of a splash screen thread to a first priority, where the first priority is higher than an initial priority of the splash screen thread. The management and control module is configured to invoke the splash screen thread based on the first priority in response to a second operation performed by the user on the first icon. The display module is further configured to display a splash screen of the first application through the splash screen thread. The display module is further configured to display an interface of the first application after displaying the splash screen of the first application.

For example, the display module may be understood as a UI component in embodiments of this application, and the management and control module may be understood as a performance management and control component in embodiments of this application.

With reference to the second aspect, in some implementations of the second aspect, that the management and control module is configured to adjust the priority of the splash screen thread to the first priority includes: The management and control module is configured to adjust the priority of the splash screen thread to the first priority, and is further configured to adjust a priority of an associated thread of the splash screen thread.

With reference to the second aspect, in some implementations of the second aspect, the management and control module is further configured to invoke the associated thread of the splash screen thread based on the first priority, and the display module is specifically configured to display the splash screen of the first application through the splash screen thread and the associated thread of the splash screen.

With reference to the second aspect, in some implementations of the second aspect, before the display module is configured to display the first interface in response to the first operation of the user, the display module is further configured to display a lock screen in response to a third operation of the user, and the management and control module is further configured to buffer an identifier of the splash screen thread.

With reference to the second aspect, in some implementations of the second aspect, the management and control module is further configured to decrease the first priority of the splash screen thread to a second priority after the display module displays the interface of the first application.

With reference to the second aspect, in some implementations of the second aspect, after the management and control module is configured to decrease the first priority of the splash screen thread to the second priority, the management and control module is further configured to: when the display module re-displays the first interface, increase the second priority of the splash screen thread to a third priority, where the third priority is higher than the initial priority of the splash screen thread. The management and control module is further configured to invoke the splash screen thread based on the third priority in response to a fourth operation performed by the user on the first icon. The display module is further configured to display the splash screen of the first application through the splash screen thread. The display module is further configured to display the interface of the first application after displaying the splash screen of the first application.

With reference to the second aspect, in some implementations of the second aspect, the third priority is the same as or different from the first priority.

With reference to the second aspect, in some implementations of the second aspect, the splash screen of the first application includes at least one of the following: the first icon, a picture, or a splash screen.

According to a third aspect, an electronic device is provided, and includes one or more processors and one or more memories. The one or more memories store one or more computer programs. The one or more computer programs include instructions. When the instructions are executed by the one or more processors, the electronic device is enabled to perform the method according to any one of the first aspect or the possible implementations of the first aspect.

According to a fourth aspect, a computer-readable storage medium is provided. The computer-readable storage medium stores a computer program. When the computer program is executed by a computer, the computer is enabled to implement the method according to any one of the first aspect or the possible implementations of the first aspect.

According to a fifth aspect, a computer program product including instructions is provided. When the computer program product is run on a computer, the computer is enabled to perform the method according to any one of the first aspect or the possible implementations of the first aspect.

According to a sixth aspect, a chip is provided. The chip includes a processor and a data interface. The processor reads, through the data interface, instructions stored in a memory, to perform the method according to any one of the first aspect or the possible implementations of the first aspect.

With reference to the sixth aspect, in a possible implementation, the processor is coupled to the memory through an interface.

With reference to the sixth aspect, in a possible implementation, the chip system further includes the memory, and the memory stores a computer program or computer instructions.

### BRIEF DESCRIPTION OF DRAWINGS

FIG. 1 is a diagram of a structure of an electronic device;
FIG. 2 is a block diagram of a software structure of an electronic device;
FIG. 3(a) to FIG. 3(f) show a group of GUIs according to an embodiment of this application;
FIG. 4(a) and FIG. 4(b) are a diagram of systraces according to an embodiment of this application;
FIG. 5 is a diagram of a system architecture according to an embodiment of this application;
FIG. 6(a) to FIG. 6(f) show a group of GUIs according to an embodiment of this application;
FIG. 7A and FIG. 7B are a schematic flowchart of a method for starting an application according to an embodiment of this application;
FIG. 8(a) to FIG. 8(e) are a diagram of comparison between systraces according to an embodiment of this application; and
FIG. 9 is a schematic flowchart of a method for starting an application according to an embodiment of this application.

### DESCRIPTION OF EMBODIMENTS

The following describes technical solutions of this application with reference to the accompanying drawings.

Terms used in the following embodiments are merely intended to describe specific embodiments, but not to limit this application. The terms "an", "a", "the", "the foregoing", and "this" of singular forms used in this specification and the appended claims of this application are also intended to include expressions such as "one or more", unless otherwise specified in the context clearly. It should be further understood that, in the following embodiments of this application, "at least one" and "one or more" mean one, two, or more. The term "and/or" describes an association relationship between associated objects, and indicates that three relationships may exist. For example, A and/or B may indicate the following cases: Only A exists, both A and B exist, and only B exists, where A and B may be in a singular form or a plural form. The character "/" usually indicates an "or" relationship between the associated objects.

Reference to "an embodiment", "some embodiments", or the like described in this specification means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "including but not limited to", unless otherwise specifically emphasized in another manner.

The following describes an electronic device, a user interface for the electronic device, and embodiments for using the electronic device. In some embodiments, the electronic device may be a portable electronic device that further includes other functions such as a personal digital assistant function and/or a music player function, for example, a mobile phone, a tablet computer, or a wearable electronic device (for example, a smartwatch) with a wireless communication function. An example embodiment of the portable electronic device includes but is not limited to a portable electronic device on which iOS^{®}, Android^{®}, Microsoft^{®}, or another operating system is installed. The portable electronic device may alternatively be another portable electronic device, for example, a laptop (Laptop) computer. It should be further understood that, in some other embodiments, the electronic device may alternatively not be a portable electronic device, but is a desktop computer. In some other embodiments, the electronic device may be an instrument for measurement, for example, an oscilloscope.

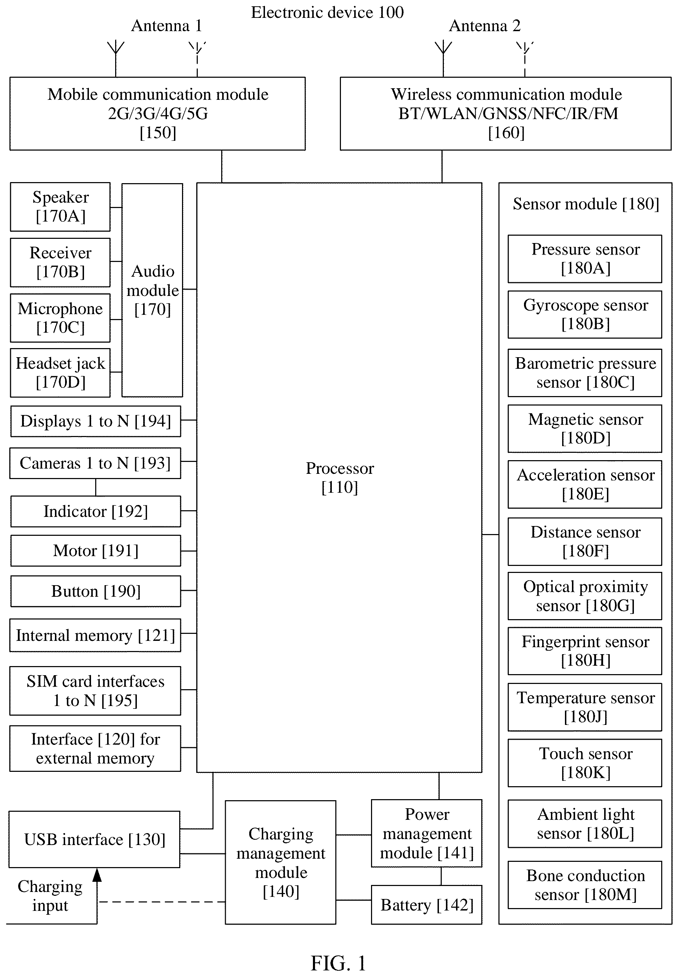

For example, FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a timing signal, to control instruction fetching and instruction execution.

A memory may be further disposed in the processor 110 to store instructions and data. In some embodiments, the memory in the processor 110 is a cache. The memory may store instructions or data that is just used or cyclically used by the processor 110. If the processor 110 needs to use the instructions or the data again, the processor may directly invoke the instructions or the data from the memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

A wireless communication function of the electronic device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 150 may provide a solution applied to the electronic device 100 for wireless communication including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor, and then a processed signal is transmitted to the application processor. The application processor outputs a sound signal through an audio device (not limited to the speaker 170A, the receiver 170B, and the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution applied to the electronic device 100 for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 160 may be one or more components integrating at least one communications processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, SCDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 implements a display function through the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs that execute program instructions to generate or change displayed information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and color temperature of an image shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may further process other digital signals in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. In this way, the electronic device 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that quickly processes input information with reference to a structure of a biological neural network, for example, a mode of transfer between human brain neurons, and may further continuously perform self-learning. Intelligent cognition applications, such as image recognition, facial recognition, speech recognition, and text understanding, of the electronic device 100 may be implemented through the NPU.

The interface 120 for external memory may be used for connecting an external memory card, for example, a micro SD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code, and the executable program code includes instructions. The processor 110 runs the instructions stored in the internal memory 121 to implement various function applications and data processing of the electronic device 100. The internal memory 121 may include a program storage area and a data storage area. The program storage area may store an operating system, an application for at least one function (for example, a sound play function or an image play function), and the like. The data storage area may store data (for example, audio data and an address book) created during use of the electronic device 100, and the like. In addition, the internal memory 121 may include a high-speed random access memory, or may include a non-volatile memory, for example, at least one magnetic disk storage device, a flash memory, or a universal flash storage (universal flash storage, UFS).

The electronic device 100 may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode through the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may move the mouth of the user near the microphone 170C to make a sound, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and recognize a sound source, to implement a directional recording function and the like.

The pressure sensor 180A is configured to sense a pressure signal, and may convert the pressure signal into an electrical signal. In some embodiments, the pressure sensor 180A may be disposed in the display 194. There are many types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch position but have different touch operation intensity may correspond to different operation instructions. For example, when a touch operation whose touch operation intensity is greater than or equal to a first pressure threshold is performed on an alarm clock application icon, an instruction for creating an alarm clock is executed.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. For example, when a mobile phone detects a touch operation of a user on a lock screen, the mobile phone may collect fingerprint information of the user through the fingerprint sensor 180H, and perform matching between the collected fingerprint information and fingerprint information preset on the mobile phone. If the matching succeeds, the mobile phone may enter a non-lock screen from the lock screen.

The touch sensor 180K is also referred to as a "touch panel". The touch sensor 180K may be disposed in the display 194. The touch sensor 180K and the display 194 constitute a touchscreen, which is also referred to as a "touch screen". The touch sensor 180K is configured to detect a touch operation performed on or near the touch sensor. The touch sensor may transmit the detected touch operation to the application processor to determine a type of a touch event. The display 194 may provide a visual output related to the touch operation. In some other embodiments, the touch sensor 180K may alternatively be disposed on a surface of the electronic device 100 at a position different from a position of the display 194.

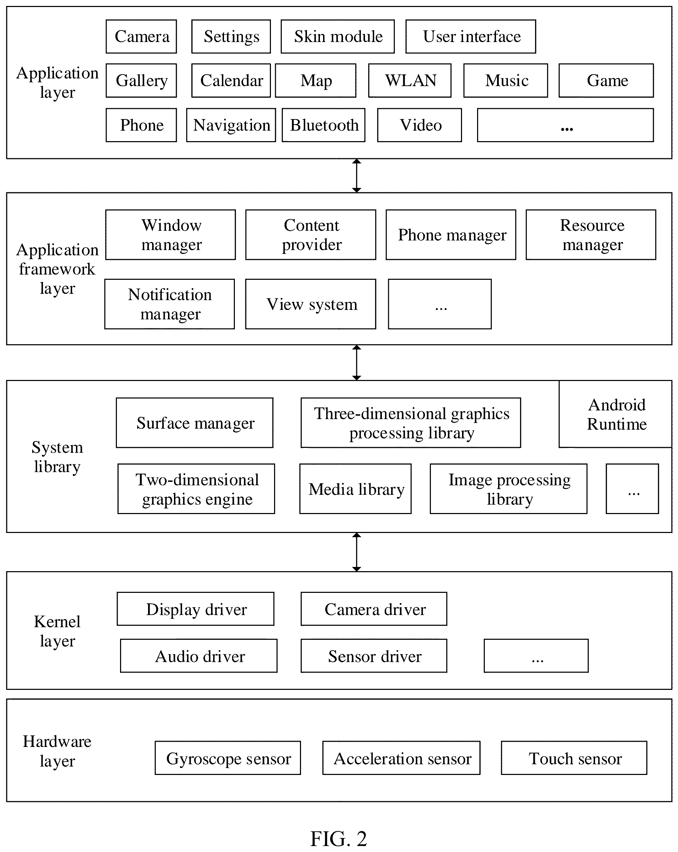

FIG. 2 is a block diagram of a software structure of the electronic device 100 according to an embodiment of this application. In a hierarchical architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. The application layer may include a series of application packages.

As shown in FIG. 2, the application layer may include Camera, Settings, a skin module, a user interface (user interface, UI), a third-party application, and the like. The third-party application may include Gallery, Calendar, Phone, Map, Navigation, WLAN, Bluetooth, Music, Video, Messages, and the like.

The application framework layer provides an application programming interface (application programming interface, API) and a programming framework for an application at the application layer. The application framework layer may include some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, or the like. The content provider is configured to store and obtain data, and enable the data to be accessed by an application. The data may include a video, an image, audio, calls that are made and answered, a browsing history, a bookmark, an address book, and the like.

The view system includes visual controls, such as a control for displaying text and a control for displaying a picture. The view system may be configured to construct an application. A display interface may include one or more views.

The phone manager is configured to provide a communication function for the electronic device 100, for example, management of a call status (including answering, hanging up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without user interaction. For example, the notification manager is configured to indicate download completion or provide a message notification. The notification manager may alternatively be a notification that appears in a top status bar of the system in a form of a graph or scroll bar text, for example, a notification for an application running in the background, or may be a notification that appears on a screen in a form of a dialog window. For example, text information is displayed in the status bar, an alert tone is played, the electronic device vibrates, or an indicator blinks.

The Android runtime includes a core library and a virtual machine. The Android runtime is responsible for invocations and management of the Android system.

The core library includes two parts: a function that needs to be invoked in Java language and a core library of Android.

The application layer and the application framework layer run in a virtual machine. The virtual machine executes Java files at the application layer and the application framework layer as binary files. The virtual machine is configured to perform functions of object lifecycle management, stack management, thread management, security and exception management, garbage collection, and the like.

The system library may include a plurality of functional modules, for example, a surface manager (surface manager), a media library (media library), a three-dimensional graphics processing library (for example, an OpenGL ES), and a two-dimensional graphics engine (for example, an SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

In addition, the system library may further include a status monitoring service module, for example, a physical status recognition module, configured to analyze and recognize a user gesture; and a sensor service module, configured to monitor sensor data uploaded by various sensors at a hardware layer, to determine a physical status of the electronic device 100.

The kernel layer is a layer between hardware and software. The kernel layer includes at least a display driver, a camera driver, an audio driver, and a sensor driver.

The hardware layer may include various sensors, for example, the sensors described in FIG. 1.

With reference to the electronic device described in FIG. 1 and FIG. 2, in embodiments of this application, the electronic device is a device that can run various applications, for example, a mobile phone terminal or a tablet computer. Physical components related to the electronic device 100 mainly include: hardware components such as a sensor, a decision support system (decision support system, DSS) display chip, a touch display, and a fingerprint recognition module; kernel software layers such as a screen management module, a display driver, a fingerprint driver, and accidental touch prevention; application framework layer functions such as accidental touch input prevention, screen control, an always on display (always on display, AOD) service, and power management; and application layer services such as a special adaptation application (camera), a third-party application, system hibernation, and AOD.

In an Android (Android) system, a splash screen (SplashScreen) thread may provide splash screens for most applications, and can provide a vivid application startup process for a user as a working thread of a user interface (user interface, UI) component. By default, a splash screen may include an icon of an application and a window background (window background) of the application. The icon of the application may serve as a central icon of the splash screen. After an invocation of a splash screen thread of the application is completed, the splash screen of the application may be dynamically displayed. Usually, the splash screen may be displayed during cold startup or warm startup of the application. To be specific, when the application is restarted after being completely killed, the splash screen may be displayed; or when the application is restarted after a main activity (Activity) of the application is destroyed or recycled, the splash screen may be displayed. The splash screen is introduced to prevent a user from waiting an excessively long time within a loading gap due to excessively long initialization time of the application during the cold startup or the warm startup. The splash screen is stopped when the startup of the application is completed and an interface of the application may be displayed, or when the application draws a first frame.

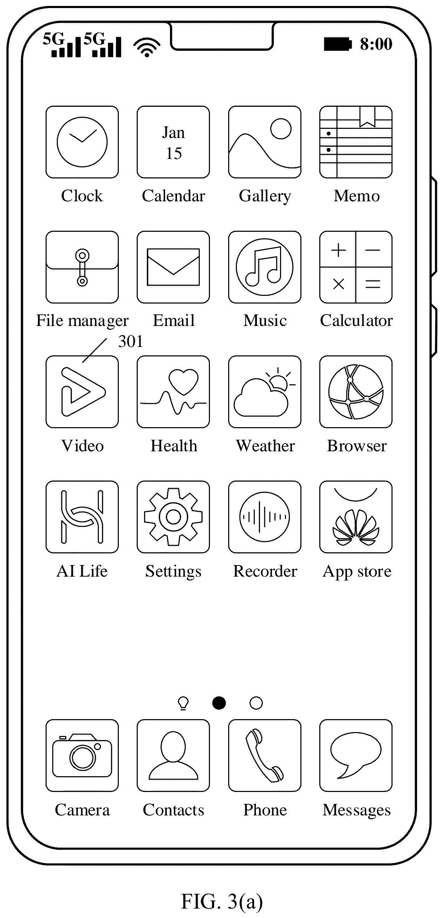

For ease of understanding, as shown in FIG. 3(a) to FIG. 3(f), a group of graphical user interfaces (graphical user interface, GUI) is shown in an example in which an application started on a mobile phone terminal is a video application.

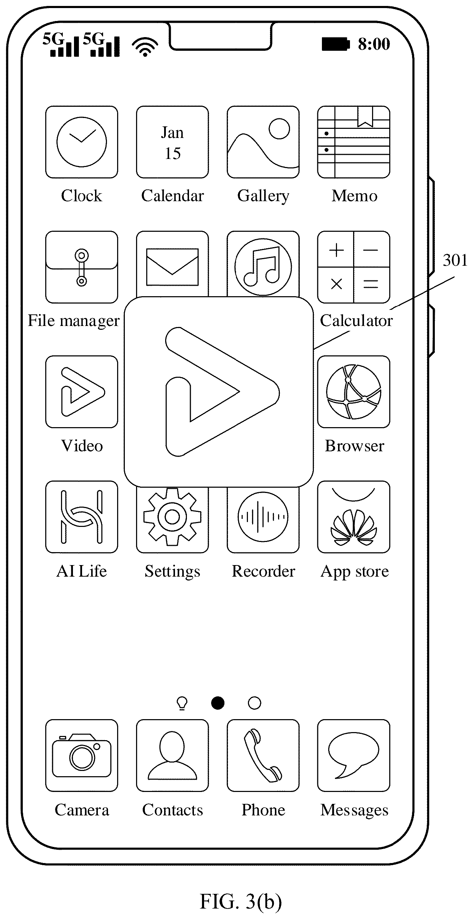

When a user unlocks a screen of the mobile phone terminal, the mobile phone terminal may display a home screen of the mobile phone terminal shown in FIG. 3(a). Icons of a plurality of applications (application, App) are displayed on the interface, and the plurality of applications include Clock, Calendar, Gallery, Video, and the like. In response to an operation performed by a user on a video application icon 301, the mobile phone terminal may sequentially display GUIs shown in FIG. 3(b) to FIG. 3(f), where the video application may be a third-party application.

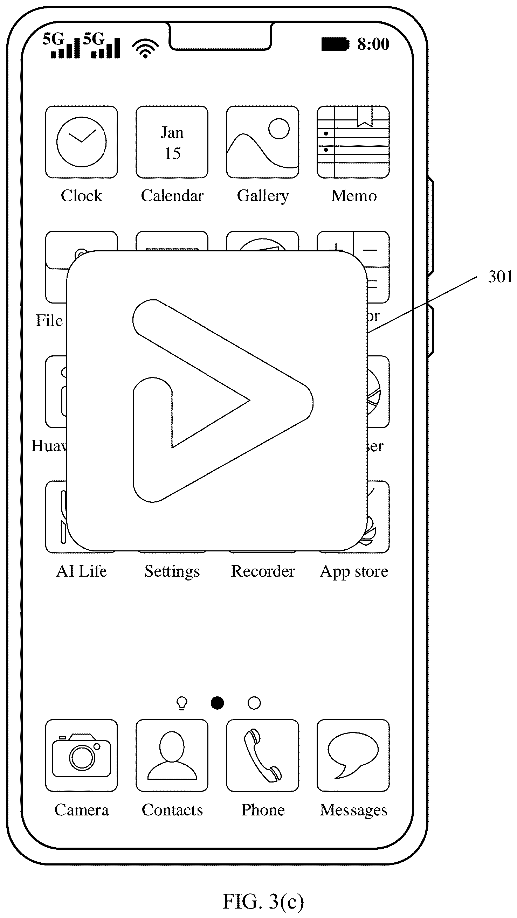

As shown in FIG. 3(b), the mobile phone terminal displays a home screen in response to the operation performed by the user on the video application icon 301. In addition to the icons of the plurality of applications shown in FIG. 3(a), the home screen may display an enlarged video application icon 301 at a middle position of the home screen. In addition, the video application icon 301 may become increasingly large over time. For example, on a home screen of the mobile phone terminal shown in FIG. 3(c), a size of a video application icon 301 on the home screen is greater than a size of the video application icon 301 shown in FIG. 3(b).

It should be noted that the size of the application icon may continuously change over time.

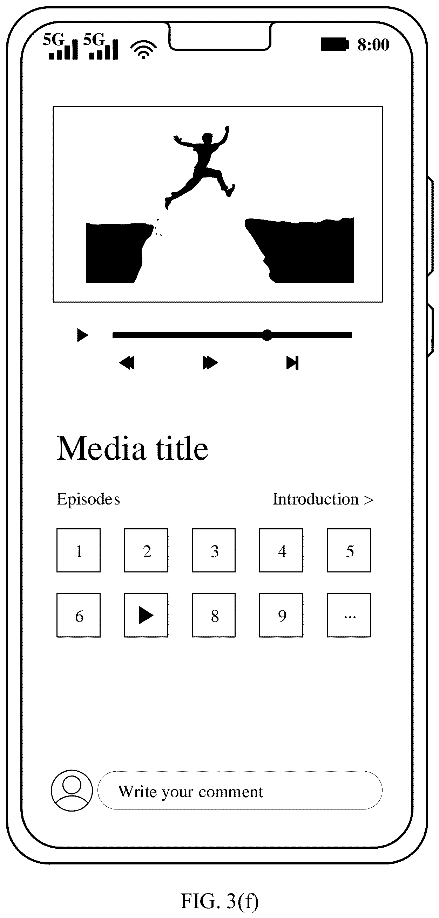

If a splash screen thread is normally invoked, a splash screen is stopped after the application draws a first frame. For example, when the splash screen thread is normally invoked, the splash screen is stopped when the mobile phone terminal displays an application interface shown in FIG. 3(f). However, the splash screen thread may not be normally invoked due to a plurality of possible causes, leading to freezing during startup of the application.

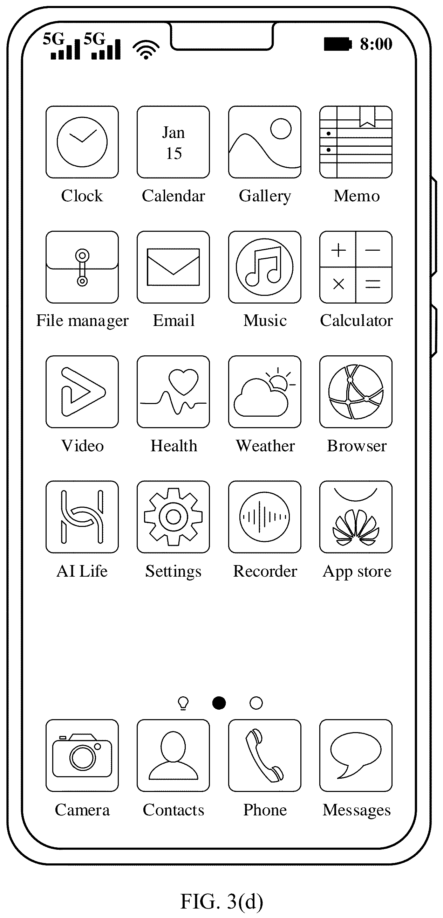

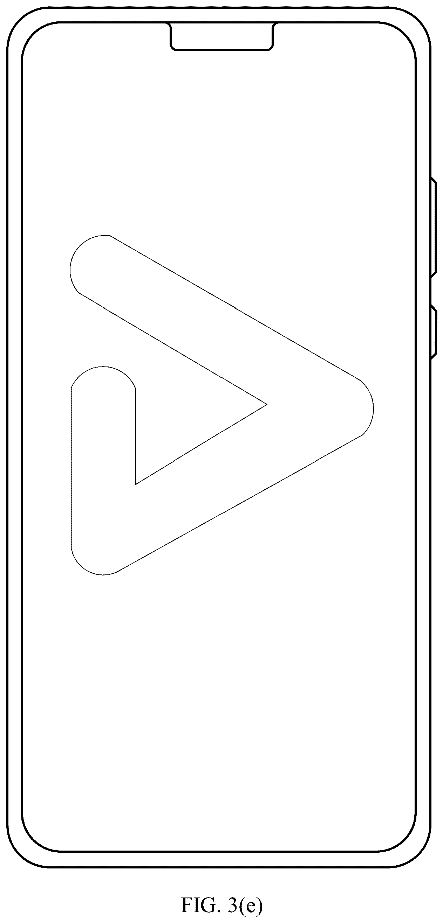

When the splash screen thread cannot be normally invoked, system freezing occurs. The system freezing is manifested on a user interface as follows: After icon loading is completed (for example, as shown in FIG. 3(c)), there is a loading gap, and the home screen of the mobile phone terminal is displayed within the loading gap. As shown in FIG. 3(d), when the splash screen thread cannot be normally invoked, the home screen of the mobile phone terminal is displayed within a loading gap after loading of the video application icon 301 is completed. After the loading gap lasts for a period of time, the mobile phone terminal may display a splash screen shown in FIG. 3(e). That is, the mobile phone terminal displaying the splash screen indicates that the invocation of the splash screen thread is completed.

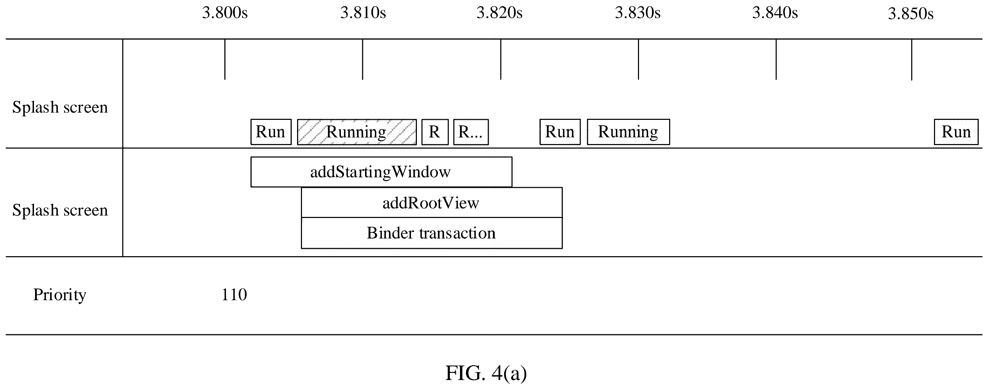

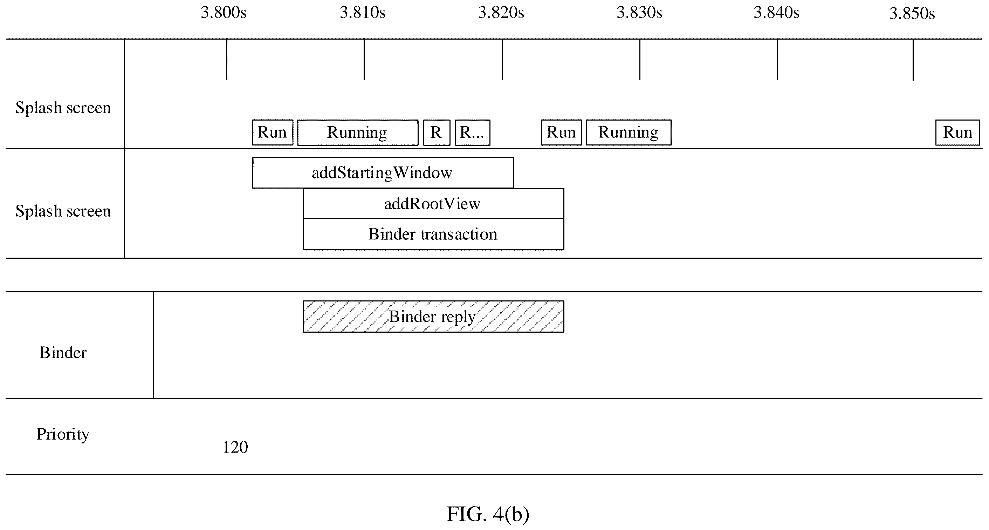

It can be learned that, when the splash screen thread cannot be normally invoked, system freezing occurs, affecting user experience. A reason why a splash screen thread cannot be normally invoked is described below with reference to a diagram of a system trace (systrace) during a splash screen of an application in FIG. 4(a) and FIG. 4(b).

FIG. 4(a) is a diagram of a systrace of a splash screen (SplashScreen) thread. For example, some tasks during an invocation of the splash screen thread are shown: for example, a starting window adding (addStartingWindow) task, a root set adding (addRootView) task, and a binder transaction (binder transaction) task. After a splash screen is set for an application, the splash screen may be displayed during startup of the application. When a splash screen thread is selected (a shadow indicates that the thread is selected), a value of a priority of the splash screen thread is displayed as 110. It can be learned that the priority of the splash screen thread is low. The splash screen thread with the low priority may hardly be invoked, or even cannot be invoked.

As shown in FIG. 4(b), the splash screen thread also invokes another thread, for example, a binder thread, during operation. The binder (Binder) thread is a manner of inter-process communication in an Android system, may bind all components in the system together, and is similar to a "bridge" between the components. As shown in FIG. 4(b), the splash screen thread includes a binder transaction task, and the task needs to interact with another thread, to be specific, interact with a peer binder thread. Time needed for processing a binder reply task in the binder thread affects time needed for processing the binder transaction task in the splash screen thread (this may be understood as that the time needed for processing the binder reply task is consistent with the time needed for processing the binder transaction task). Therefore, when a priority of the peer binder thread of the splash screen thread is low, time needed for invoking the binder thread is long. This affects task processing time corresponding to the splash screen thread, and therefore affects processing time of the splash screen thread. In FIG. 4(b), when a binder thread is selected, a value of a priority of the binder thread is displayed as 120. It can be learned that a low priority of the thread (the binder thread) invoked by the splash screen thread also affects an invocation of a central processing unit (central processing unit, CPU) for the splash screen thread, leading to system freezing.

Therefore, to resolve the foregoing problem that system freezing occurs because a splash screen thread cannot be normally invoked, this application provides a method for starting an application, to increase a priority of a splash screen thread or a priority of a binder thread. In a scenario in which a system has high load, the splash screen thread can still be normally invoked, to make a splash screen of an application smoother, and improve user experience.

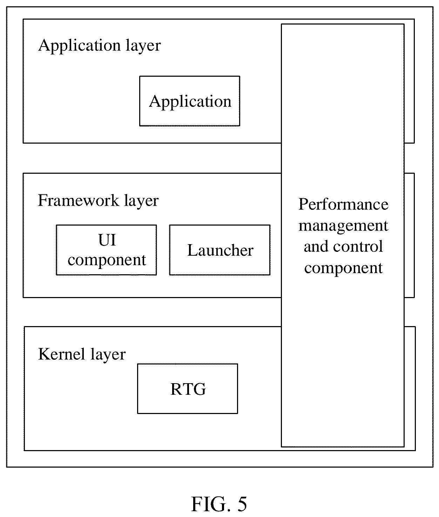

FIG. 5 is a diagram of a system architecture according to this application. The system architecture may be carried in an electronic device, and may include an application layer, a framework layer, and a kernel layer.

Specifically, the application layer carries an application (Application, APP). The application may be understood as an application that is carried in the electronic device and that provides a plurality of functional service software programs for a user, for example, a map, a game, or a video. The electronic device may be understood as a device like a personal computer, a tablet computer, or a mobile phone terminal. The application may be usually displayed on a home screen of the mobile phone terminal in a form of an icon, and startup of the application is triggered by interaction between the user and the application icon.

The framework layer carries a UI component and a launcher. The UI component may be understood as a system (system) UI, and is a system-level Android application package (Android application package, APK). The UI component may provide a basic display interface for the system, for example, a status bar at the top of a screen, a navigation bar at the bottom of the screen, a quick setting bar on a drop-down interface, a notification bar, a lock screen, a volume adjustment dialog box, or a screenshot display interface. In this application, the UI component may provide a lock screen of the electronic device, display a splash screen, and the like. For an Android system, a last step of system startup may be starting a home application, where the application is used to display an application that has been installed in the system, and the home application is a launcher. During the startup, the launcher requests a package manager service (package manager service, PMS) to return information about the application that has been installed in the system, packages the information into an icon, and displays the icon on the screen, so that the user can tap the icon to start the corresponding application. In this application, the launcher may display icons of various applications on the home screen of the electronic device.

The kernel layer carries a real-time priority scheduling (real-time group, RTG) module. The RTG module may be configured to specifically adjust a priority of an application thread (for example, a splash screen thread or a binder thread).

In addition, the system architecture in this application further includes a performance management and control component (iAware). The performance management and control component may be carried in the application layer, the framework layer, and the kernel layer, to facilitate management and control of a thread priority in this application.

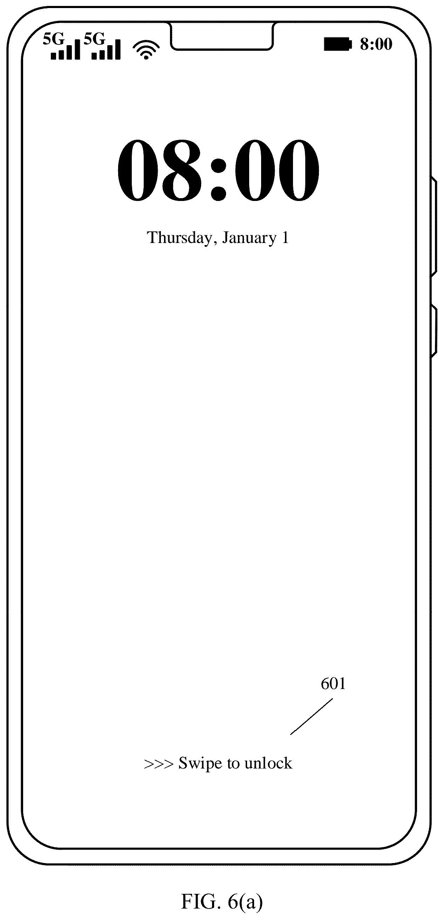

For ease of understanding, the following shows a group of GUIs with reference to FIG. 6(a) to FIG. 6(f). A method for starting an application in embodiments of this application is described by using a mobile phone terminal as an example and by assuming that an application is a video application.

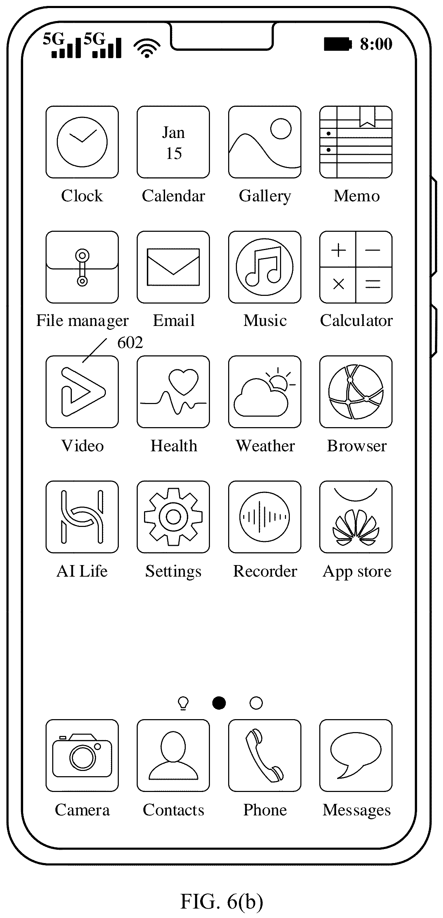

FIG. 6(a) shows a lock screen of the mobile phone terminal. A user may press and hold a power button to trigger the mobile phone terminal to display the lock screen. The power-on operation of the user may also be understood as triggering system startup of the electronic device. A Swipe to unlock icon 601 is displayed on the lock screen of the mobile phone terminal. In response to an operation of the user to swipe the Swipe to unlock icon 601 from left to right, the mobile phone terminal may display a GUI shown in FIG. 6(b).

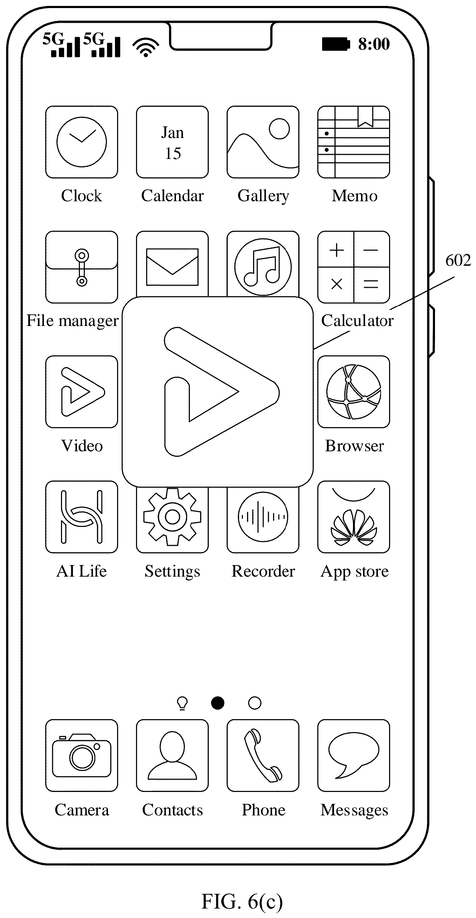

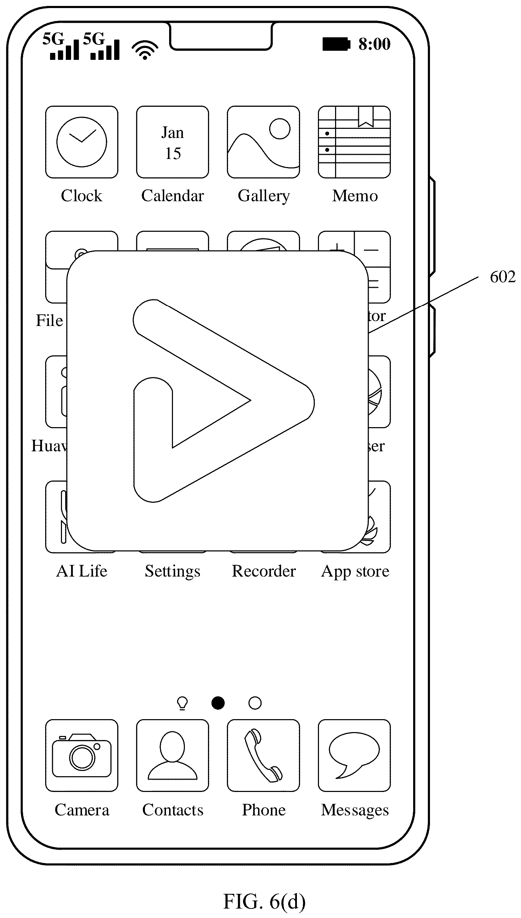

As shown in FIG. 6(b), the mobile phone terminal displays a home screen in response to the operation of the user to swipe the Swipe to unlock icon 601 from left to right. The home screen of the mobile phone terminal includes icons of a plurality of applications. The plurality of applications include Clock, Gallery, Calendar, Video, and the like. In response to an operation performed by the user on a video icon 602, the mobile phone terminal may display a GUI shown in FIG. 6(c) and a GUI shown in FIG. 6(d).

As shown in FIG. 6(c), in response to the operation performed by the user on the video icon 602, an enlarged video icon 602 is displayed on the home screen of the mobile phone terminal. In addition, the video icon 602 may become larger over time. For example, as shown in FIG. 6(d), the video icon 602 displayed on the home screen of the mobile phone terminal becomes larger over time.

It should be noted that the operation performed by the user on the video icon 602 triggers startup of the video application, and triggers a system to invoke a splash screen thread.

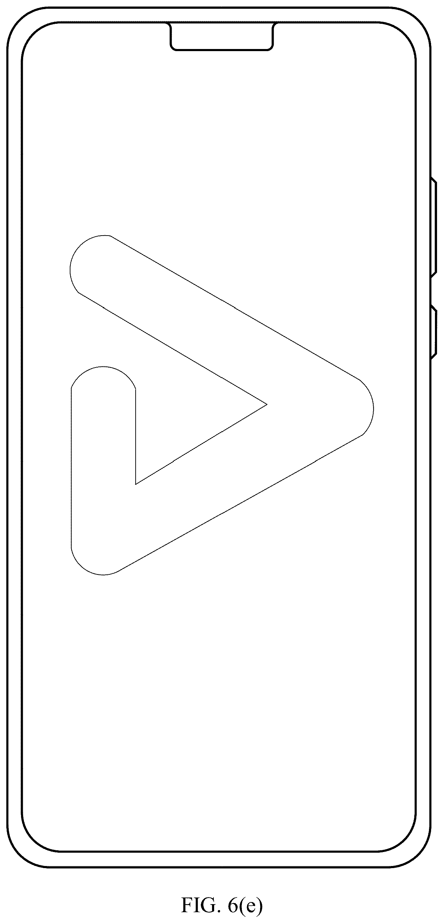

As shown in FIG. 6(e), in response to completion of the splash screen thread, the mobile phone terminal displays a splash screen. The splash screen may include an icon of the video application or a window background of the video application.

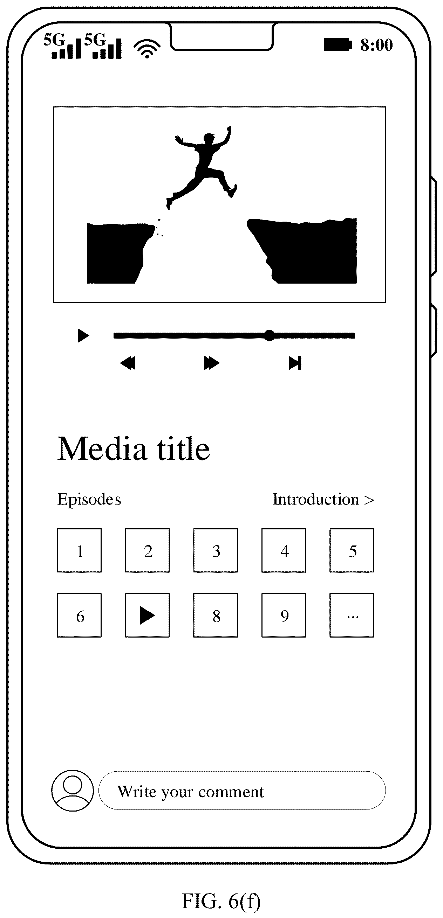

As shown in FIG. 6(f), in response to completion of displaying the splash screen, the mobile phone terminal displays a main interface of the video application. It can be understood that the mobile phone terminal displaying the main interface of the video application indicates that the video application has drawn a first frame, and the splash screen is stopped.

It should be noted that, on the group of GUIs shown in FIG. 6, after the user taps an icon of an application, the electronic device normally invokes a splash screen thread, and a splash screen may be smoothly displayed on an interface of the electronic device. To be specific, the following problem is avoided: Because the splash screen thread cannot be normally invoked, a loading gap (for example, a GUI shown in FIG. 3(d)) is displayed between a GUI shown in FIG. 6(e) and a GUI shown in FIG. 6(d), and the loading gap is continuously displayed for a period of time, affecting user experience.

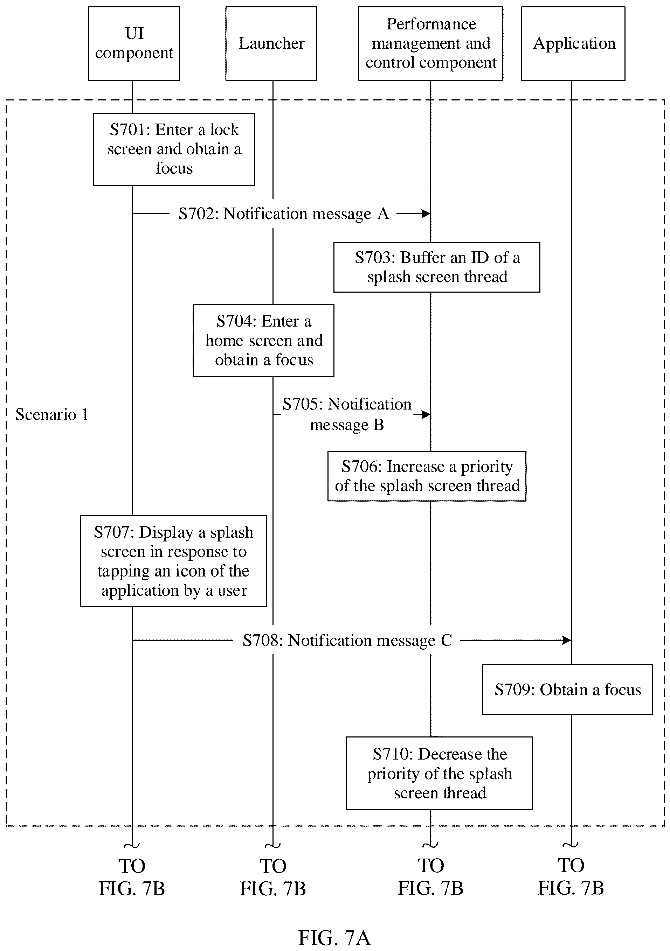

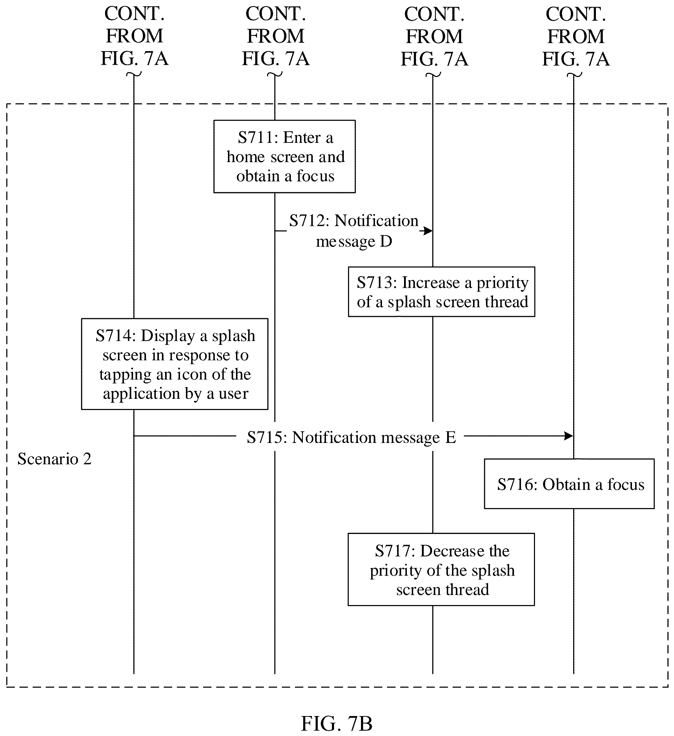

With reference to FIG. 7A and FIG. 7B, the following specifically describes a method for starting an application in embodiments of this application. For example, FIG. 6(a), FIG. 6(b),

FIG. 6(c), FIG. 6(d), FIG. 6(e), and FIG. 6(f) show methods for starting an application in two scenarios. The two scenarios are separately described below.

### Scenario 1: After an electronic device is unlocked, an application is directly started.

It should be noted that the scenario 1 may be understood as cold startup of the application.

S701: Enter a lock screen, and a UI component obtains a focus.

For example, the electronic device enters the lock screen in response to an operation of starting the electronic device by a user. For example, a user presses and holds, or presses a power button of a mobile phone terminal, and the mobile phone terminal is powered on and enters a lock screen.

For example, the lock screen is the lock screen of the mobile phone terminal shown in FIG. 6(a).

S702: The UI component sends a notification message A, and correspondingly, a performance management and control component (iAware) receives the notification message A.

S703: The performance management and control component buffers an identifier (Identifier, ID) of a splash screen thread.

It should be noted that the performance management and control component may obtain the notification message A when the electronic device is powered on, where the notification message A is used to notify the performance management and control component that the electronic device is powered on. The performance management and control component buffers the ID of the splash screen thread, to facilitate subsequent management of a priority of the splash screen thread.

S704: Enter a home screen, and a launcher obtains a focus.

For example, in response to an unlocking operation of the user, the electronic device enters the home screen, for example, the home screen of the mobile phone terminal shown in FIG. 3(a), or the home screen of the mobile phone terminal shown in FIG. 6(b).

S705: The launcher sends a notification message B, and correspondingly, the performance management and control component receives the notification message B.

S706: The performance management and control component increases the priority of the splash screen thread.

It should be noted that the performance management and control component may obtain the notification message B when the electronic device displays the home screen, where the notification message B is used to notify the performance management and control component that the home screen is displayed on the electronic device. The performance management and control component increases the priority of the splash screen thread. During startup of the application, the splash screen thread may be preferentially invoked, to make the startup of the application smoother.

For example, the performance management and control component adjusts the priority of the splash screen thread through an RTG.

Further, the performance management and control component may adjust a priority of a binder thread through the RTG.

It should be noted that the splash screen thread may invoke the binder thread. The performance management and control component may determine, based on the ID of the splash screen thread that is buffered in step S703, the binder thread invoked by the splash screen thread, and adjust the priority of the binder thread through the RTG.

It can be understood that the binder thread is a thread that can be invoked by the splash screen thread. It can be learned from the foregoing descriptions of FIG. 4(b) that the priority of the binder thread also affects the invocation of the splash screen thread. Based on this, an increase in the priority of the binder thread enables a system to preferentially invoke the splash screen thread.

S707: The UI component displays a splash screen in response to tapping an icon of the application by the user.

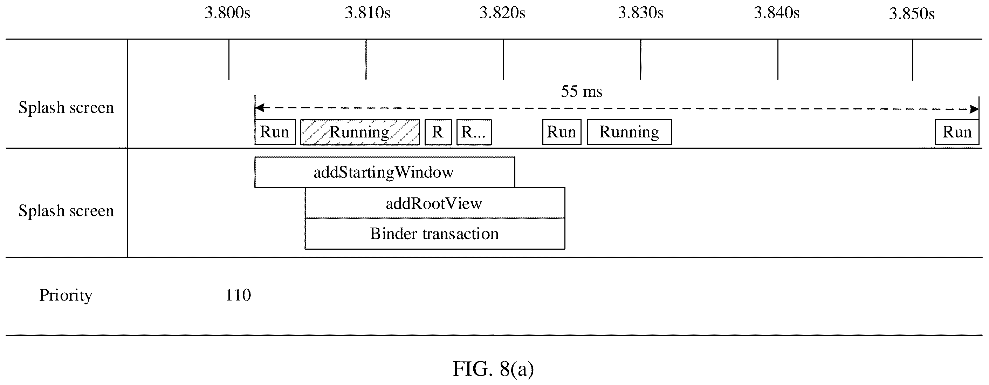

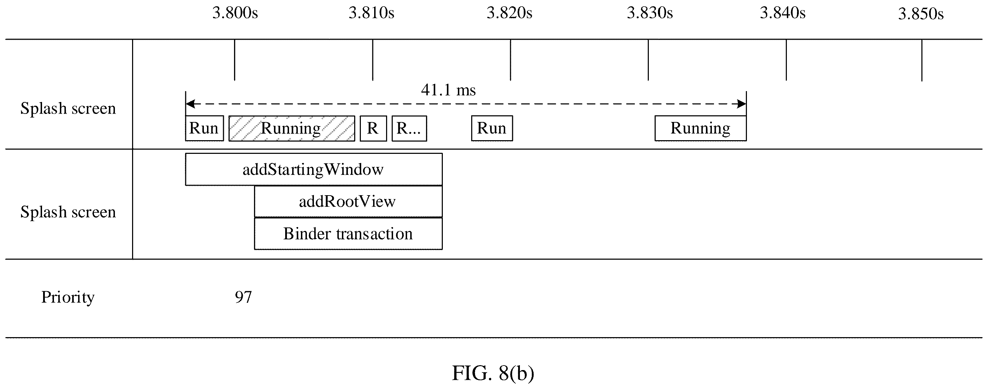

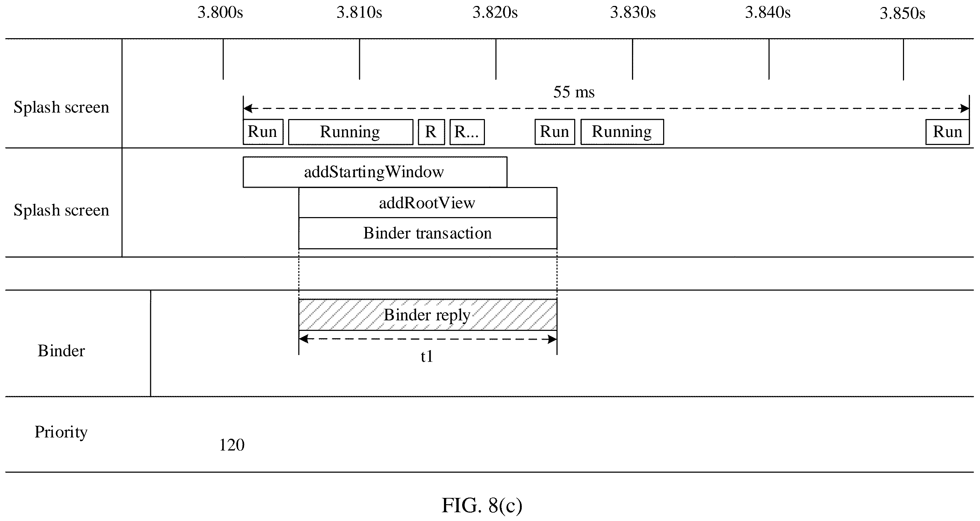

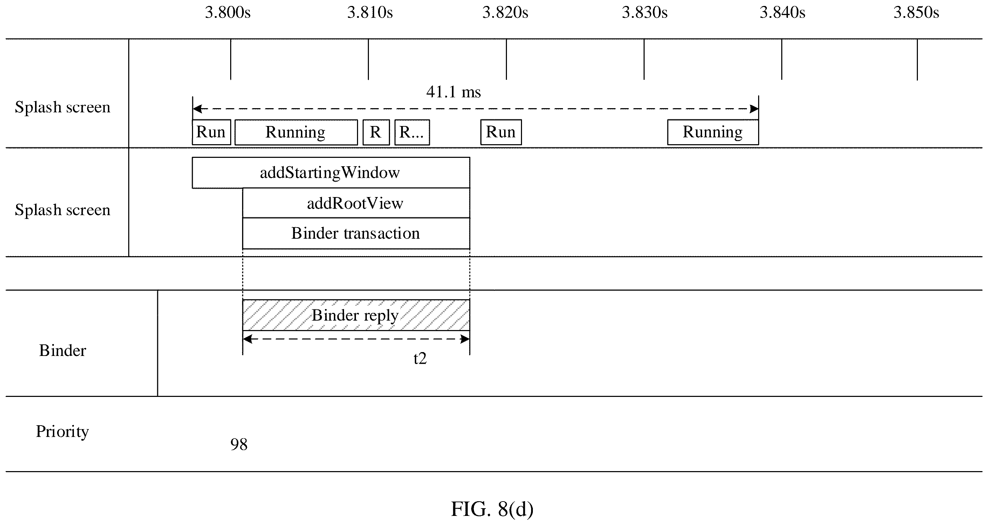

For example, a trigger condition for displaying the splash screen is shown in FIG. 6(b): The user taps an icon of an application on the home screen. Because the priority of the splash screen thread is increased in step S706, when the user taps the icon of the application, the splash screen thread is preferentially invoked based on an adjusted priority. For example, compared with FIG. 8(a), in FIG. 8(b), the priority of the splash screen thread is increased, and when the splash screen is invoked based on an adjusted priority, processing time of the splash screen thread is shortened. Compared with FIG. 8(c), in FIG. 8(d), the priority of the binder thread invoked by the splash screen thread is increased. This also enables the system to preferentially invoke the splash screen thread, so that processing time of the splash screen thread is shortened. The system preferentially invokes the splash screen thread, so that a splash screen can be smoothly displayed, for example, the splash screen shown in FIG. 6(e). It can be understood that the splash screen is dynamically displayed on a screen.

It should be noted that the splash screen thread may be preferentially invoked because the priority of the splash screen thread is increased in step S706. When the user taps the icon of the application, the splash screen shown in FIG. 6(e) can be displayed in a timely manner, to avoid a problem that a loading gap is displayed because the splash screen thread cannot be normally invoked, affecting user experience.

S708: The UI component sends a notification message C, and correspondingly, the application receives the notification message C.

S709: The application obtains a focus.

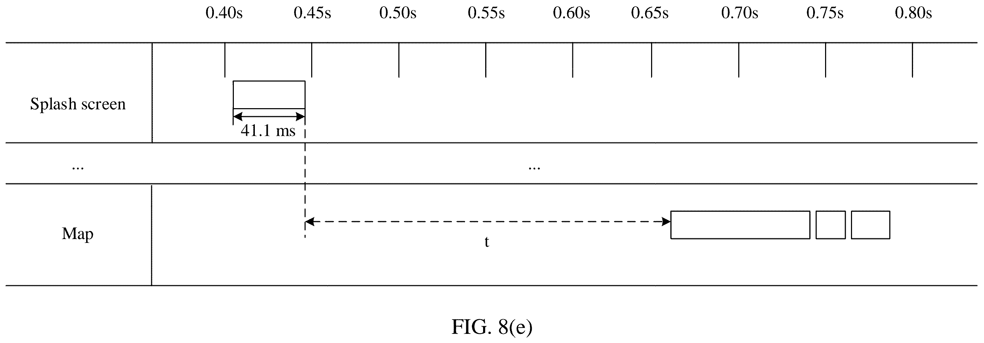

It should be noted that the application obtains the notification message C after the displaying of the splash screen is completed. The notification message C is used to notify the application that the displaying of the splash screen is completed. After the splash screen is stopped, the application starts to draw a first frame. For example, as shown in FIG. 8(e), the splash screen (for example, as shown in FIG. 6(e)) is displayed within time t, and after the displaying of the splash screen is completed, in other words, after t ends, a main interface of a map (map) application is displayed. The electronic device displays a main interface of the application indicates that the application starts to draw the first frame.

For example, as shown in FIG. 6(f), when the application draws the first frame, the splash screen is stopped, and the mobile phone terminal displays the main interface of the application.

S710: The performance management and control component decreases the priority of the splash screen thread.

It should be noted that, when the application starts to draw the first frame, the splash screen thread has been completed. Therefore, the performance management and control component may decrease the priority of the splash screen thread to release CPU performance, so that the system can invoke another thread.

For example, after the displaying of the splash screen is completed, the performance management and control component removes the splash screen thread from the RTG, to decrease the priority of the splash screen thread, so that subsequent interaction between the user and the application is smoother.

### Scenario 2: After an application is closed, a home screen of an electronic device is re-displayed, and the application is restarted.

It should be noted that the scenario 2 may be understood as warm startup of the application.

S711: Enter the home screen, and a launcher obtains a focus.

For example, the electronic device enters the home screen of the electronic device in response to an operation of exiting the application by a user. For example, the electronic device returns to the home screen shown in FIG. 6(b).

It should be noted that the operation of exiting the application by the user may be understood as that a user interface is switched from an interface of the application back to the home screen, and the application is no longer run in the background.

S712: The launcher sends a notification message D, and correspondingly, a performance management and control component receives the notification message D.

S713: The performance management and control component increases a priority of a splash screen thread.

It should be noted that the performance management and control component may obtain the notification message D when the electronic device returns to the home screen, where the notification message D is used to notify the performance management and control component that the home screen is displayed on the electronic device. The notification message D is similar to the notification message B in step S705.

It should be noted that step S712 and step S713 are similar to step S705 and step S706 respectively.

To be specific, it can be learned from step S710 that the priority of the splash screen thread is decreased after displaying of a splash screen of the application is completed. To avoid affecting a next invocation of the splash screen thread, the performance and control component re-increases the priority of splash screen thread when the user exits the application and enters the home screen.

In an implementation, the electronic device responds to tapping an icon of an application by the user, and a system invokes the splash screen thread whose priority has been increased in step S713, and displays a splash screen. The icon tapped by the electronic device may be an icon of the application that is exited in step S711, or may be an icon of another application. To be specific, after exiting an application, the user may re-tap an icon of the application, to display a splash screen of the application. In this case, the priority of the splash screen thread is also a priority obtained through adjustment by the performance management and control component. In this way, both a splash screen for cold startup of the application and a splash screen for warm startup of the application can be smoothly displayed.

S714: A UI component displays a splash screen in response to tapping an icon of the application by the user.

S715: The UI component sends a notification message E, and correspondingly, the application receives the notification message E.

S716: The application obtains a focus.

S717: The performance management and control component decreases the priority of the splash screen thread.

It can be understood that the notification message E in step S715 is similar to the notification message C in step S708. Step S714 to step S717 are similar to step S707 to step S710. Details are not described herein again.

According to the foregoing solution, the priority of the splash screen thread is increased before the application is started, and when the user triggers startup of the application, the system invokes the splash screen thread, and smoothly displays the splash screen of the application on an interface of the electronic device, to improve user experience.

FIG. 8(a) to FIG. 8(f) are a diagram of comparison between a group of systraces for a method for starting an application. Impact of a thread priority on thread processing time may be clearly learned from the diagrams of comparison between systraces.

As shown in FIG. 8(a), when a splash screen (SplashScreen) thread is selected (displaying in a shadow indicates that the thread is selected), a value of a priority of the thread is 110. Processing time for invoking the splash screen thread by a system is 55 ms. In addition, the system starts to invoke the splash screen thread after 3.800s.

As shown in FIG. 8(b), the priority of the splash screen thread is increased by using the method for starting an application in this application. When the splash screen thread is selected, the value of the priority of the thread is 97. It can be learned that the priority with a value of 97 is higher than the priority with a value of 110. Therefore, in comparison with a systrace shown in FIG. 8(a), processing time for invoking the splash screen thread with an increased priority by the system is 41.1 ms. The processing time is significantly shortened. In addition, the system starts to invoke the splash screen thread before 3.800s.

Through comparison between FIG. 8(a) and FIG. 8(b), it can be learned that, when a user taps an icon of an application to trigger startup of the application, the processing time for invoking the splash screen thread with an increased priority by the system is significantly shorter than the processing time for invoking, by the system, the splash screen thread whose priority has not been increased, and the system may invoke the splash screen thread with an increased priority earlier.

In addition, the system may further increase a priority of a binder thread invoked by the splash screen thread, to shorten processing time for invoking the splash screen thread.

As shown in FIG. 8(c), when a binder reply task in the binder thread is selected, a value of the priority of the binder thread is 120, processing time for invoking the splash screen thread by the system is 55 ms, and processing time of the binder reply task is t1. In addition, the system starts to invoke the splash screen thread before 3.800s.

As shown in FIG. 8(d), the priority of the binder thread invoked by splash screen thread is increased by using the method for starting an application in this application. When the binder reply task is selected, the value of the priority of the binder thread is 98. It can be learned that the priority with a value of 98 is higher than the priority with a value of 120. Processing time for invoking the splash screen thread by the system is 41.1 ms, and processing time of the binder reply task is t2, where t2 is less than t1. In addition, the system starts to invoke the splash screen thread before 3.800s.

A dashed line between a binder transaction task and the binder reply task shown in FIG. 8(c) and FIG. 8(d) indicates that time needed for processing the binder reply task in the binder thread affects time needed for processing the binder transaction task in the splash screen thread. The binder thread is a thread that can be invoked by the splash screen thread, and the priority of the binder thread also affects the invocation of the splash screen thread.

It should be noted that processing time of the splash screen thread can be shortened by increasing the priority of the splash screen thread and the priority of the binder thread. According to the method for starting an application in this application, the priorities of the two threads may be separately increased, or both the priorities of the two threads may be increased, so that the system can preferentially invoke the splash screen thread, to better shorten processing time for invoking the splash screen thread, and enable the system to start to invoke the splash screen thread earlier.

It can be understood that the time at which the invocation of the thread is started, the processing time for invoking the thread, and the task processing time are merely examples, and specific processing time is not limited in embodiments of this application.

As shown in FIG. 8(e), according to the method for a splash screen thread in this application, when a user triggers startup of an application (for example, a map app), the system preferentially invokes the splash screen thread, completes the invocation of the splash screen thread within 41.1 ms, displays a splash screen within time t (as shown in FIG. 6(e)), and stops the splash screen when the map app draws a first frame. It can be learned that, when the system preferentially invokes the splash screen thread, processing time of the splash screen thread is short, and the startup screen can be quickly displayed, to avoid a problem that a loading gap is displayed due to an assumption that the splash screen cannot be normally invoked, affecting user experience.

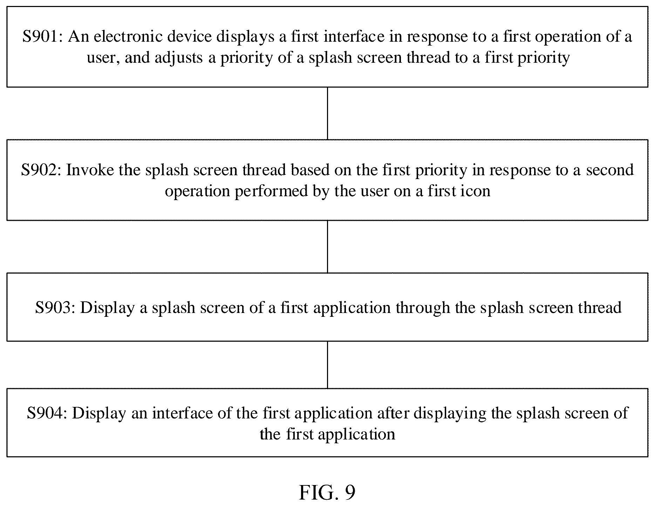

FIG. 9 is a schematic flowchart of a method for starting an application according to an embodiment of this application. The method may be applied to an electronic device. The following specifically describes the method.

S901: The electronic device displays a first interface in response to a first operation of a user, and adjusts a priority of a splash screen thread to a first priority.

For example, the first interface is a home screen (or a desktop) of the electronic device, for example, the home screen of the mobile phone terminal shown in FIG. 6(b). Icons of applications are displayed on the desktop of the electronic device, and the user may slide left and right on the desktop, to enable the electronic device to display icons of different applications.

It should be noted that a specific manner of triggering, by the user, the electronic device to display the first interface is not limited, and includes but is not limited to: The user triggers, by entering an unlock password of the electronic device or through facial recognition, fingerprint recognition, or the like, the electronic device to display the first interface.

That is, when the electronic device displays the home screen, the priority of the splash screen (SplashScreen) thread may be adjusted.

It should be noted that the first priority is higher than an initial priority of the splash screen. For example, a value of the initial priority of the splash screen may be 110, as shown in FIG. 8(a); and a value of the first priority may be 97, as shown in FIG. 8(b). It can be understood that, although the value of the first priority is less than the value of the initial priority, the indicated first priority is higher than the initial priority.

In an implementation, when displaying the first interface and adjusting the priority of the splash screen thread to the first priority, the electronic device may further adjust a priority of an associated thread of the splash screen thread.

For example, the associated thread of the splash screen thread is a binder thread.

For example, as shown in FIG. 8(c), a value of an initial priority of the binder thread is 120; and as shown in FIG. 8(d), a priority of the binder thread is increased, and a value of the priority is 98.

That is, the priority of the splash screen thread may be increased, or the priority of the binder thread may be increased, or both the priority of the splash screen thread and the priority of the binder thread may be increased, to enable the splash screen thread to be preferentially invoked by a system.

It should be noted that, that the system preferentially invokes the splash screen thread may be understood as that the system starts to invoke the splash screen thread earlier, and/or processing time for invoking the splash screen thread by the system is shortened.

S902: Invoke the splash screen thread based on the first priority in response to a second operation performed by the user on a first icon.

It should be noted that a plurality of icons may be displayed on the first interface, and the first icon is one of the plurality of icons. The icons are icons of applications. The first icon is an icon of a first application.

For example, the second operation performed by the user on the first icon may be tapping the first icon by the user. Tapping the first icon by the user may trigger startup of an application corresponding to the icon. In other words, tapping the first icon by the user may trigger a splash screen of the application corresponding to the icon.

To be specific, after the splash screen thread is increased, the electronic device may preferentially invoke the splash screen thread with the first priority. Even when the electronic device has high load (for example, a plurality of applications are run in the background), the splash screen thread can still be normally invoked.

S903: Display a splash screen of the first application through the splash screen thread.

It should be noted that the electronic device may display the splash screen of the first application on a user interface by invoking the splash screen thread with the first priority. Because the splash screen thread is normally invoked, the splash screen is also smoother.

It should be noted that, it can be learned from step S901 that the priority of the associated thread of the splash screen thread may also be adjusted when the priority of the splash screen thread is adjusted. After adjusting the priority of the associated thread of the splash screen thread, the electronic device may further invoke the associated thread of the splash screen thread based on the first priority, and may further display the splash screen of the first application through the splash screen thread and the associated thread of the splash screen. For example, as shown in FIG. 8(d), the priority of the binder thread is increased.

S904: Display an interface of the first application after displaying the splash screen of the first application.

It should be noted that the electronic device may further display a lock screen before the electronic device displays the home screen.

To be specific, before displaying the first interface in response to the first operation of the user, and adjusting the priority of the splash screen thread in step S901, the electronic device may further display the lock screen in response to a third operation of the user, and buffer an identifier of the splash screen thread.

It should be noted that a specific manner of triggering, by the user, the electronic device to display the lock screen is not limited, and includes but is not limited to: The user performs a power-on operation or the like on the electronic device.

It can be understood that the electronic device may pre-buffer the identifier of the splash screen thread when displaying the lock screen, to facilitate subsequent adjustment of the priority of the splash screen thread. Specifically, a performance management and control component carried in the electronic device may buffer the identifier of the splash screen thread.

In an implementation, the first priority of splash screen thread is decreased to a second priority after the interface of the first application is displayed.

It can be understood that, after displaying of the splash screen of the first application is completed, startup of the first application is completed, and the interface of the application is displayed. After the first application is started, the user may complete interaction on the interface of the first application. In this case, the priority of the splash screen thread may be appropriately decreased, to release a part of computing power of a CPU and reduce energy consumption.

In an implementation, after the first priority of the splash screen thread is decreased to the second priority, when the electronic device re-displays the first interface, the second priority of the splash screen thread is increased to a third priority. The splash screen thread is invoked based on the third priority in response to a fourth operation performed by the user on the first icon. The splash screen of the first application is displayed through the splash screen thread. The interface of the first application is displayed after the splash screen of the first application is displayed.

For example, the third priority is the same as or different from the first priority.

It can be understood that displaying the first interface herein is re-displaying compared with displaying the first interface by the electronic device in step S901.

To be specific, after the user powers on the electronic device, when the electronic device displays the home screen for the first time, or when the electronic device returns from an interface of an application to the home screen, an increase in the priority of the splash screen thread is triggered. In this way, when the user subsequently taps an icon of any application to trigger startup of the application, the system can invoke the splash screen thread with a high priority, to ensure smooth displaying of a splash screen.

For example, the splash screen of the first application includes at least one of the following: the first icon, a picture, or a splash screen. The first icon may serve as a central icon of the splash screen of the first application, the picture may serve as a background of a splash screen interface of the first application (for example, different colors may be set for the background), and the splash screen may dynamically display the first icon and the picture on a user interface.

According to the foregoing solution, before an application of the electronic device is started, the priority of the splash screen thread may be increased. When the user triggers startup of an application, the system may preferentially invoke the splash screen thread. In this way, in a scenario in which the electronic device has high load, the splash screen thread can still be normally invoked, to avoid a problem that difficulty in a system invocation causes freezing during displaying of a splash screen on a user interface, affecting user experience.

An embodiment of this application provides a computer program product. When the computer program product is run on a device, the device is enabled to perform the technical solutions in the foregoing embodiments. An implementation principle and technical effects of the computer program product are similar to those of the foregoing method-related embodiments. Details are not described herein again.

An embodiment of this application provides a readable storage medium. The readable storage medium includes instructions. When the instructions are run on a device, the device is enabled to perform the technical solutions in the foregoing embodiment. An implementation principle and technical effects of the readable storage medium are similar. Details are not described herein again.

An embodiment of this application provides a chip. The chip is configured to execute instructions. When the chip runs, the technical solutions in the foregoing embodiments are performed. An implementation principle and technical effects of the chip are similar. Details are not described herein again.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application. However, it should not be considered that the implementation goes beyond the scope of embodiments of this application.

It can be clearly understood by a person skilled in the art that, for ease and brevity of description, for detailed working processes of the foregoing apparatuses and units (modules), reference may be made to corresponding processes in the foregoing method embodiments. Details are not described herein again.

In the several embodiments provided in this application, it should be understood that the disclosed devices, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The foregoing units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for starting an application, wherein the method is applied to an electronic device, and comprises:
displaying, by the electronic device, a first interface in response to a first operation of a user, and adjusting a priority of a splash screen thread to a first priority, wherein the first interface is a desktop of the electronic device, the first interface comprises a first icon, the first icon is an icon of a first application, and the first priority is higher than an initial priority of the splash screen thread;
invoking the splash screen thread based on the first priority in response to a second operation performed by the user on the first icon;
displaying a splash screen of the first application through the splash screen thread; and
displaying an interface of the first application after displaying the splash screen of the first application.

2. The method according to claim 1, wherein adjusting the priority of the splash screen thread to the first priority comprises:
adjusting the priority of the splash screen thread to the first priority; and
adjusting a priority of an associated thread of the splash screen thread.

3. The method according to claim 2, wherein the method further comprises:
invoking the associated thread of the splash screen thread based on the first priority; and
displaying the splash screen of the first application through the splash screen thread comprises:
displaying the splash screen of the first application through the splash screen thread and the associated thread of the splash screen.

4. The method according to any one of claims 1 to 3, wherein before the electronic device displays the first interface in response to the first operation of the user, and adjusts the priority of the splash screen thread to the first priority, the method further comprises:
displaying, by the electronic device, a lock screen in response to a third operation of the user, and buffering an identifier of the splash screen thread.

5. The method according to any one of claims 1 to 4, wherein the method further comprises:
decreasing the first priority of the splash screen thread to a second priority after displaying the interface of the first application.

6. The method according to claim 5, wherein after decreasing the first priority of the splash screen thread to the second priority, the method further comprises:
when the electronic device re-displays the first interface, increasing the second priority of the splash screen thread to a third priority, wherein the third priority is higher than the initial priority of the splash screen thread;
invoking the splash screen thread based on the third priority in response to a fourth operation performed by the user on the first icon;
displaying the splash screen of the first application through the splash screen thread; and
displaying the interface of the first application after displaying the splash screen of the first application.

7. The method according to claim 6, wherein the third priority is the same as or different from the first priority.

8. The method according to any one of claims 1 to 7, wherein the splash screen of the first application comprises at least one of the following: the first icon, a picture, or a splash screen.

9. An apparatus for starting an application, comprising:
a display module, configured to display a first interface in response to a first operation of a user, wherein the first interface is a desktop of the electronic device, the first interface comprises a first icon, and the first icon is an icon of a first application; and
a management and control module, configured to adjust a priority of a splash screen thread to a first priority, wherein the first priority is higher than an initial priority of the splash screen thread, wherein
the management and control module is configured to invoke the splash screen thread based on the first priority in response to a second operation performed by the user on the first icon;
the display module is further configured to display a splash screen of the first application through the splash screen thread; and
the display module is further configured to display an interface of the first application after displaying the splash screen of the first application.

10. The apparatus according to claim 9, wherein that the management and control module is configured to adjust the priority of the splash screen thread to the first priority comprises:
the management and control module is configured to adjust the priority of the splash screen thread to the first priority; and
is further configured to adjust a priority of an associated thread of the splash screen thread.

11. The apparatus according to claim 10, wherein
the management and control module is further configured to invoke the associated thread of the splash screen thread based on the first priority; and
the display module is specifically configured to display the splash screen of the first application through the splash screen thread and the associated thread of the splash screen.

12. The apparatus according to any one of claims 9 to 11, wherein before the display module is configured to display the first interface in response to the first operation of the user,
the display module is further configured to display a lock screen in response to a third operation of the user; and
the management and control module is further configured to buffer an identifier of the splash screen thread.

13. The apparatus according to any one of claims 9 to 12, wherein
the management and control module is further configured to decrease the first priority of the splash screen thread to a second priority after the display module displays the interface of the first application.

14. The apparatus according to claim 13, wherein after the management and control module is configured to decrease the first priority of the splash screen thread to the second priority,
the management and control module is further configured to: when the display module re-displays the first interface, increase the second priority of the splash screen thread to a third priority, wherein the third priority is higher than the initial priority of the splash screen thread;
the management and control module is further configured to invoke the splash screen thread based on the third priority in response to a fourth operation performed by the user on the first icon;
the display module is further configured to display the splash screen of the first application through the splash screen thread; and
the display module is further configured to display the interface of the first application after displaying the splash screen of the first application.

15. The apparatus according to claim 14, wherein the third priority is the same as or different from the first priority.

16. The apparatus according to any one of claims 9 to 15, wherein the splash screen of the first application comprises at least one of the following: the first icon, a picture, or a splash screen.

17. An electronic device, comprising:
one or more processors; and
one or more memories, wherein
the one or more memories store one or more computer programs, the one or more computer programs comprise instructions, and when the instructions are executed by the one or more processors, the electronic device is enabled to perform the method according to any one of claims 1 to 8.

18. A computer-readable storage medium, wherein the computer-readable storage medium stores a computer program, and when the computer program is executed by a computer, the computer is enabled to implement the method according to any one of claims 1 to 8.

19. A computer program product comprising instructions, wherein when the computer program product is run on a computer, the computer is enabled to perform the method according to any one of claims 1 to 8.

20. A chip, wherein the chip comprises a processor and a data interface, and the processor reads, through the data interface, instructions stored in a memory, to perform the method according to any one of claims 1 to 8.
